# EUROPÄISCHE PATENTSCHRIFT

(11) **EP 0 781 907 B1**
(45) Veröffentlichungstag und Bekanntmachung des Hinweises auf die Patenterteilung: **11.07.2001**
(21) Anmeldenummer: 95810821.9
(22) Anmeldetag: 27.12.1995
(51) Int. Cl.: F02B 75/02, F02B 3/06, F02D 13/02

(54) **Verfahren und Vorrichtung zum Betrieb einer selbstzündenden Hubkolben-Brennkraftmaschine**
Method and device for operating an auto-igniting piston engine
Procédé et dispositif pour le fonctionnement d'un moteur à pistons à auto-allumage

(43) Veröffentlichungstag der Anmeldung: 02.07.1997
(73) Patentinhaber: Wärtsilä NSD Schweiz AG, 8401 Winterthur (CH)
(72) Erfinder: Geist, Markus, Ch-8050 Zürich (CH)
(74) Vertreter: Sulzer Management AG

(56) Entgegenhaltungen:
- EP-A- 0 285 190
- WO-A-92/14919
- DE-A- 4 012 490
- GB-A- 2 018 352
- US-A- 3 224 423

## Beschreibung

Die Erfindung betrifft ein Verfahren zum Betrieb einer selbstzündenden Hubkolben-Brennkraftmaschine gemäss dem Oberbegriff von Anspruch 1. Die Erfindung betrifft weiter eine Vorrichtung zum Betrieb einer selbstzündenden Hubkolben-Brennkraftmaschine gemäss dem Oberbegriff von Anspruch 8.

Grosse, selbstzündende Hubkolben-Brennkraftmaschine wie Dieselmotoren weisen bei Teillastbetrieb einen reduzierten Wirkungsgrad auf. Aus der EP 0 316 271 B1 ist bekannt, den Wirkungsgrad eines Dieselmotors dadurch zu verbessern, dass der Zeitpunkt des Beginns des Einspritzens von Brennstoff in den Zylinderraum bezogen auf den Drehwinkel der Kurbelwelle in gewissen Grenzen variiert wird. Dadurch gelingt es, den Wirkungsgrad in einem eng begrenzten Teillastbereich zu verbessern.

Aus der WO-A-92/14919 ist ein Kontrollsystem für eine Brennkraftmaschine bekannt, bei welchem mittels eines Sensors eine Zustandsgrösse der Maschine erfasst wird und in Abhängigkeit dieser Zustandsgrösse die Einspritzung sowie die Ventilsteuerzeiten gesteuert werden.

Es ist Aufgabe der vorliegenden Erfindung, den Wirkungsgrad einer selbstzündenden Hubkolben-Brennkraftmaschine weiter zu verbessern, um eine Hubkolben-Brennkraftmaschine wirtschaftlicher zu betreiben. Insbesondere soll die Hubkolben-Brennkraftmaschine über einem grösseren Teillastbereich einen höheren Wirkungsgrad aufweisen.

Diese Aufgabe wird gelöst mit einem Verfahren gemäss den Merkmalen von Anspruch 1. Die Unteransprüche 2 bis 7 beziehen sich auf weitere, vorteilhafte Ausgestaltungen des Verfahrens. Die Aufgabe wird weiter gelöst mit einer Vorrichtung gemäss den Merkmalen von Anspruch 8. Der Unteranspruch 9 beziehen sich auf eine weitere, vorteilhafte Ausgestaltungen der Vorrichtung.

Das erfindungsgemässe Verfahren zum Betrieb einer selbstzündenden Hubkolben-Brennkraftmaschine wird derart betrieben, dass mit einem Sensor zumindest eine Zustandsgrösse der Hubkolben-Brennkraftmaschine erfasst wird, und dass in Abhängigkeit der mindestens einen Zustandsgrösse sowohl der Einspritzbeginn einer Brennstoff-Einspritzvorrichtung als auch der Öffnungs- und/oder der Schliessbeginn eines Ein- oder Auslassventils derart geregelt wird, dass im Verbrennungsraum der Kompressionsdruck im oberen Totpunkt oder der maximale während der Verbrennung im Brennraum auftretende Druck in Funktion der Last in einem oberen Teillastbereich einen konstanten oder annähernd konstanten Wert aufweist.

Ein derartiges Verfahren kann als eine Teillasthilfe bezeichnet werden, weil das Verhalten der Hubkolben-Brennkraftmaschine im Teillastbetrieb verbessert wird. Durch das erfindungsgemässe Verfahren wird in einem oberen Teillastbereich, welcher in einem Bereich von etwa 50% bis 100% der Nennlast liegt, der Kompressionsdruck im oberen Totpunkt oder der maximal auftretende Druck im Innenraum des Zylinders konstant oder annähernd konstant gehalten. Insbesondere wird im oberen Teillastbereich ein etwa gleicher Druck wie bei Nennlast erreicht. Dadurch lässt sich in diesem oberen Teillastbereich eine Wirkungsgradverbesserung erzielen.

Dabei wird mit einem Sensor zumindest eine der folgenden Zustandsgrössen der Hubkolben-Brennkraftmaschine gemessen: Aufladedruck, Maximaldruck im Zylinder, Druck zu einem bestimmten Kurbelwellenwinkel im Zylinder, Motorleistung, Motordrehzahl, Turboladerdrehzahl, Temperatur nach dem Verdichter, Temperatur nach dem Ladeluftkühler, Verbrennungsluftmenge, Abgastemperatur vor der Turbine, Abgastemperatur nach der Turbine oder Brennstoffmenge.

Bei einer 2-Takt-Hubkolben-Brennkraftmaschine wird nebst der Brennstoff-Einspritzvorrichtung das Auslassventil angesteuert. Bei einer 4-Takt-Hubkolben-Brennkraftmaschine wird nebst der Brennstoff-Einspritzvorrichtung das Einlassventil und/oder das Auslassventil angesteuert. Durch die kombinierte Ansteuerung der Brennstoff-Einspritzvorrichtung als auch des Einlass- und/oder Auslassventils lässt sich über einem sehr grossen Teillastbereich, nämlich dem vorhin erwähnten oberen Teillastbereich ein konstanter Druck und damit gegenüber dem Stand der Technik eine Wirkungsgradverbesserung erzielen.

Die während der Verbrennung erzeugte Gasmenge an NOx hängt unter anderem ab vom Verhältnis des maximalen Druckes zur abgegebenen Leistung. Wird nun im oberen Teillastbereich der Druck konstant gehalten, die Leistung jedoch reduziert, so führt dies zu einer erhöhten Gasmenge an NOx bei Teillasten. Die Entstehung von zusätzlichem NOx lässt sich vermeiden indem über die Brennstoff-Einspritzvorrichtung eine Emulsion bestehend aus Brennstoff und Wasser dem Zylinderraum zur Verbrennung zugeführt wird. Das Mischverhältnis an Wasser und Brennstoff, welches die Emulsion aufweist, lässt sich mit einer Mischvorrichtung in einem weiten Bereich verändern und insbesondere auch unter Berücksichtigung der gemessenen Zustandsgrösse ansteuern. Ein Vorteil der Verwendung einer Emulsion in Kombination mit dem vorhin beschriebenen Verfahren zur Wirkungsgradverbesserung bei Teillast ist somit darin zu sehen, dass die Hubkolben-Brennkraftmaschine im oberen Teillastbereich sowohl einen verbesserten Wirkungsgrad als auch eine reduzierte Erzeugung von NOx-Gasen aufweist.

Die Erfindung wird weiter an Hand mehrerer Ausführungsbeispiele beschrieben. Es zeigen:
- Fig. 1a: Eine schematische Ansicht einer 4-Takt-Hubkolben-Brennkraftmaschine;
- Fig. 1b: eine schematische Ansicht einer 2-Takt-Hubkolben-Brennkraftmaschine;
- Fig. 2a: eine schematische Ansicht gemäss Fig. 1a mit zusätzlichen Sensoren und einer Regelvorrichtung;
- Fig. 2b: eine schematische Ansicht gemäss Fig. 1b mit zusätzlichen Sensoren und einer Regelvorrichtung;
- Fig. 3a: ein Zusammenhang zwischen Last bzw. Motorleistung und Druck im Verbrennungsraum;
- Fig. 3b: ein Zusammenhang zwischen Last bzw. Motorleistung und Erzeugung von NOx-Gasen;
- Fig. 4: ein Zusammenhang der Zusammensetzung einer Emulsion in Funktion der Last bzw. der Motorleistung;
- Fig. 5: eine Vorrichtung zur Erzeugung einer Emulsion.

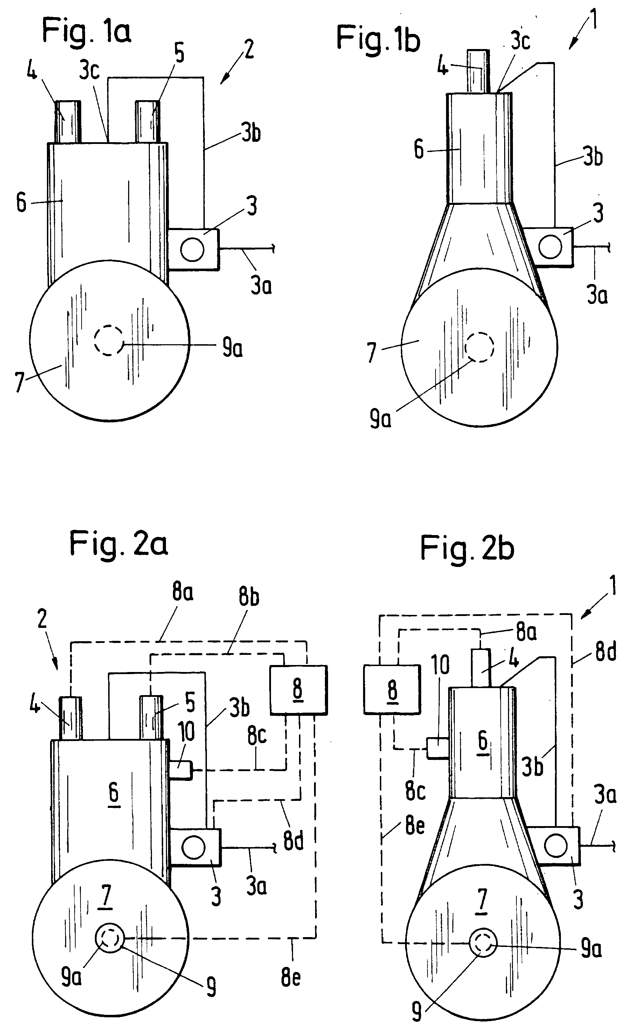

Fig. 1a zeigt eine schematische Seitenansicht einer selbstzündenden 4-Takt Hubkolben-Brennkraftmaschine 2, die als ein langsamlaufender Grossdieselmotor ausgestaltet ist. Diese Brennkraftmaschine 2 weist ein Zylindergehäuse 6 mit mehreren hintereinander angeordneten Zylinder auf, welche gemeinsam auf eine innerhalb des Kurbelwellengehäuses 7 angeordnete Kurbelwelle 9a wirken. Der Brennstoff wird über eine Zuführleitung 3a einer Einspritzpumpe 3 zugeführt, und gelangt weiter über eine Leitung 3b und eine Einspritzdüse 3c in den Brennraum des Zylindergehäuses 6. Weiter weist der 4-Takt Dieselmotor 2 ein Einlassventil 5 sowie ein Auslassventil 4 auf.

Fig. 1b zeigt eine schematische Seitenansicht einer selbstzündenden 2-Takt Hubkolben-Brennkraftmaschine 1, die als ein langsamlaufender Grossdieselmotor verwendet wird. Diese Brennkraftmaschine 1 weist ein Zylindergehäuse 6 mit mehreren hintereinander angeordneten Zylinder auf, welche gemeinsam auf eine innerhalb des Kurbelwellengehäuses 7 angeordnete Kurbelwelle 9a wirken. Der Brennstoff wird über eine Zuführleitung 3a einer Einspritzpumpe 3 zugeführt und gelangt weiter über eine Leitung 3b und eine Einspritzdüse 3c in den Brennraum des Zylindergehäuses 6. Weiter weist der 2-Takt Dieselmotor 2 ein Auslassventil 4 für die verbrannten Gase auf. Die Verbrennungsluft wird über Schlitze angesaugt.

Fig. 2a zeigt den 4-Takt Dieselmotor 2 gemäss Fig. 1a mit einer Ansteuer- und Regelvorrichtung 8, welche über elektrische Verbindungsleitungen 8a,8b,8d das Einlassventil 5, das Auslassventil 4 sowie die Einspritzpumpe 3 ansteuert. Zudem wird der aktuelle Winkel der Kurbelwelle 9a mit einem Drehwinkelsensor 9 erfasst und der Regelvorrichtung 8 über eine elektrische Verbindungsleitung 8e zugeführt. Mit einem Sensor 10 wird zumindest eine Zustandsgrösse erfasst, beispielsweise der Maximaldruck im Zylinder 6 oder der Druck im Zylinder 6 zu einem bestimmten Kurbelwellenwinkel, insbesondere den Kompressionsdruck im oberen Totpunkt des Zylinders. Der mit dem Sensor 10 gemessene Wert wird der Regelvorrichtung 8 über eine elektrische Verbindungsleitung 8c zugeführt.

Fig. 2b zeigt den 2-Takt Dieselmotor 1 gemäss Fig. 1b mit einer Ansteuer- und Regelvorrichtung 8, welche über elektrische Verbindungsleitungen 8a, 8d das Auslassventil 4 sowie die Einspritzpumpe 3 ansteuert. Zudem wird der aktuelle Winkel der Kurbelwelle 9a mit einem Drehwinkelsensor 9 erfasst und der Regelvorrichtung 8 zugeführt. Mit einem Sensor 10 wird zumindest eine Zustandsgrösse erfasst und der Regelvorrichtung 8 über eine elektrische Verbindungsleitung 8c zugeführt. Es können bei beiden Ausführungsformen eines Dieselmotors 1,2 auch mehrere Sensoren 10 angeordnet sein, um unterschiedliche Zustandsgrössen zu erfassen und der Regelvorrichtung 8 zuzuleiten.

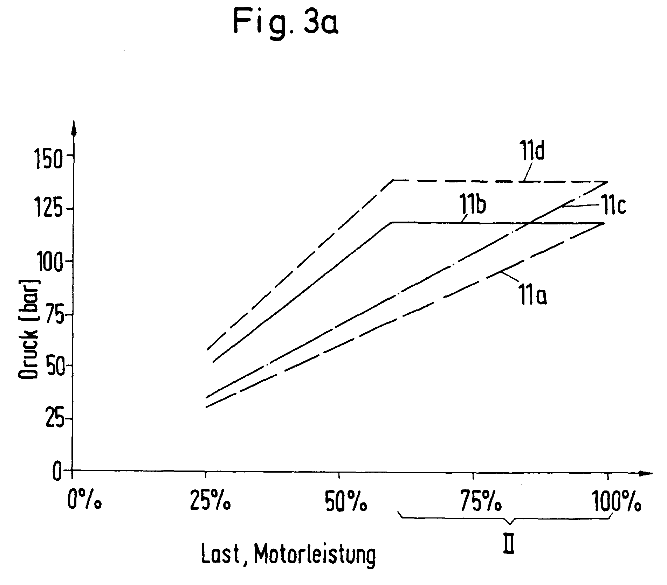

In Fig. 3a ist die Auswirkung des erfindungsgemässen Verfahrens auf den Zusammenhang zwischen Last bzw. Motorleistung und Druck im Verbrennungsraum des Dieselmotors 1,2 dargestellt. Die Gerade 11a zeigt den Verlauf der Kompressionsdruckes im oberen Totpunkt in Funktion der Motorleistung bzw. der Last ohne eine Teillasthilfe. 11b zeigt den Verlauf desselben Kompressionsdruckes im oberen Totpunkt in Funktion der Motorleistung wenn der Dieselmotor gemäss dem erfindungsgemässen Verfahren betrieben wird. Bei einem 4-Takt Dieselmotor 2 wird die Einspritzpumpe 3 sowie das Einlassventil 5 als auch das Auslassventil 4 derart von der Regelvorrichtung 8 angesteuert, dass der Kompressionsdruck in einem oberen Teillastbereich II einen konstanten Wert annimmt, und im unteren Teillastbereich linear abfällt. Ein 2-Takt Dieselmotor 2 wird durch das Ansteuern der Einspritzpumpe 3 sowie des Auslassventils 4 derart betrieben, dass der Kompressionsdruck llb ebenfalls in oberen Teillastbereich II einen konstanten Wert annimmt, und im unteren Teillastbereich linear abfällt. Die Gerade 11c zeigt den Verlauf des maximal im Brennraum auftretenden Druckes in Funktion der Motorleistung bzw. der Last ohne eine Teillasthilfe. Der Verlauf 11d zeigt den Verlauf desselben maximalen im Brennraum auftretenden Druckes in Funktion der Motorleistung wenn der Dieselmotor gemäss dem erfindungsgemässen Verfahren betrieben wird. Dabei wird das Auslassventil 4 und/oder das Einlassventil 5 sowie die Einspritzpumpe 3 derart in Relation zum Winkel der Kurbelwelle 9b beziehungsweise in zeitlicher Relation angesteuert, dass die Kurven 11b,11d im oberen Teillastbereich II einen konstanten oder annähernd konstanten Verlauf aufweisen.

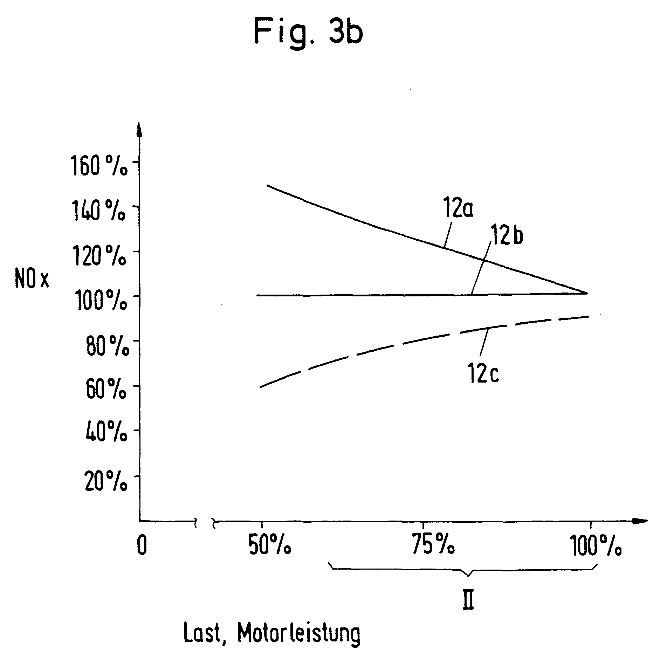

Fig. 3b zeigt ein Zusammenhang zwischen Last bzw. Motorleistung des Dieselmotors 1,2 und die Menge des durch die Verbrennung erzeugten NOx-Gases. Ohne eine Teillasthilfe verläuft der Anteil erzeugter NOx-Gase im oberen Teillastbereich II ungefähr konstant. Wird eine Teillasthilfe verwendet, welche gemäss Fig. 3a wirkt und über dem oberen Teillastbereich II einen konstanten oder ungefähr konstanten Druckwert erzeugt, wo wird, wie in Kurve 12a dargestellt, mit zunehmend geringerer Teillast ein höherer Anteil an NOx-Gasen erzeugt. Diese erhöhten Anteile an NOx-Gasen bei Teillast sind aus ökologischen Gründen unerwünscht. Daher wird in einer besonders vorteilhaften Ausgestaltung des erfinderischen Verfahrens eine Emulsion bestehend aus Brennstoff und Wasser verwendet, welche der Einspritzpumpe 3 zugeführt wird und über die Einspritzdüse 3c in den Zylinderraum eingespritzt wird. Die Kurve 12c zeigt den Anteil an NOx-Gasen im oberen Teillastbereich II in Funktion der Last unter Verwendung einer Teillasthilfe mit einer Wirkung gemäss den Kurvenverläufen 11b,11d und unter Verwendung einer Emulsion bestehend aus Brennstoff und Wasser. Aus ökologischen Gründen ist es daher vorteilhaft, das erfindungsgemässe Verfahren gemäss Fig. 3a in Kombination mit einer Emulsion bestehend aus Brennstoff und Wasser zu betreiben.

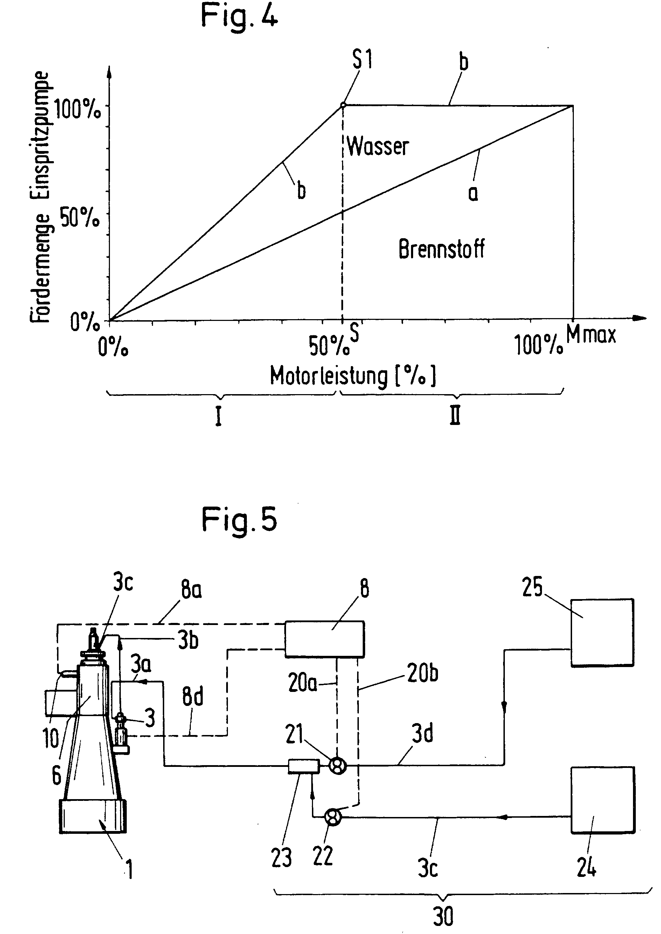

Fig. 4 zeigt die Fördermenge der Einspritzpumpe 3 in Funktion der Motorleistung. Die Gerade a zeigt eine konventionell betriebene Einspritzpumpe, bei welcher die gesamte geförderte Fluidmenge nur aus Brennstoff besteht, wobei die geförderte Menge in Abhängigkeit der Motorleistung verändert wird. Der Verlauf der Geraden b zeigt das vorteilhafte Verfahren zum Mischen und Fördern einer Emulsion bestehend aus Wasser und Brennstoff in Funktion der Motorleistung. Mit einem Sensor wird die Motorleistung der Dieselbrennkraftmaschine erfasst. In einem unteren Motorleistungsbereich I, von etwa 0% bis 50% der Vollast, wird proportional zur geförderten Brennstoffmenge a eine zusätzliche Menge Wasser beigemischt, sodass die gesamte zur Einspritzpumpe 3 geförderte Wasser-Brennstoff-Emulsion einer Menge gemäss dem Verlauf der Geraden b entspricht. Im oberen Teillastbereich II, der vom Punkt S bis zu einer maximalen Motorleistung Mmax verläuft, wird die gesamte zur Einspritzpumpe 3 geförderte Emulsionsmenge, entsprechend dem Verlauf der Kurve b, konstant gehalten. Dabei wird die Brennstoffmenge in Funktion der Motorleistung entsprechend dem Verlauf der Kurve a verändert, und die zusätzlich beigefügte Menge Wasser derart geregelt, dass die gesamte Menge der Wasser-Brennstoff-Emulsion konstant oder annähernd konstant gehalten wird. Das in Fig. 4 dargestellte Mischverhältnis zwischen Brennstoff und Wasser im oberen Teillastbereich II in Funktion der Motorleistung ist nur als ein Beispiel zu betrachten. Das Verhältnis kann auch anders als entlang der Kurve a verlaufen, um eine vorteilhafte Reduktion der NOx-Gase zu erzielen.

Fig. 5 zeigt eine vereinfacht dargestellte Vorrichtung 30 zum Mischen und Fördern einer Emulsion bestehend aus Brennstoff und Wasser. Ein Sensor 10 zum Erfassen eines Zustandes der Dieselbrennkraftmaschine ist über eine Signalleitung 8a mit der Regelvorrichtung 8 verbunden. Die Drehzahl zweier Förderpumpen 21,22 wird über je eine Signalleitung 20a,20b durch die Regelvorrichtung 8 vorgegeben. Von einem mit Brennstoff gefüllten Tank 25 wird über eine Leitung 3d und die nachgeschaltete Förderpumpe 21 einer Emulgieranalge 23 Brennstoff zugeführt. Von einem mit Wasser gefüllten Tank 24 wird über eine Leitung 3c und die nachgeschaltete Förderpumpe 22 Wasser der Emulgieranlage 23 zugeführt, welche das Wasser in nicht näher dargestellten Weise mit dem Brennstoff zu eine Wasser-Brennstoff-Emulsion vermischt. Diese Emulsion wird über eine Leitung 3a der Einspritzpumpe 3 zugeführt und über die Leitung 3b und die Einspritzdüse in den Zylinderraum des Zylindergehäuses 6 eingespritzt. Die Regelvorrichtung 8 überwacht den Sensor 8 und überwacht und steuert die weiteren, in Fig. 2a oder 2b dargestellten Komponenten.

## Patentansprüche

1. Verfahren zum Betrieb einer selbstzündenden Hubkolben-Brennkraftmaschine in einem Lastbereich, bei dem mit einem Sensor (10) zumindest eine Zustandsgrösse der Hubkolben-Brennkraftmaschine erfasst wird, und in Abhängigkeit der mindestens einen Zustandsgrösse sowohl der Einspritzbeginn einer Brennstoff-Einspritzvorrichtung (3) als auch der Öffnungs- und/oder der Schliessbeginn eines Ein- oder Auslassventils (5,4) gesteuert wird, dadurch gekennzeichnet, dass die Steuerung des Einspritzbeginns und der Ventilsteuerzeiten derart durchgeführt wird, dass der Kompressionsdruck im Verbrennungsraum in Funktion der Last in einem oberen Teillastbereich konstant oder annähernd konstant bleibt.

2. Verfahren nach Anspruch 1, dadurch gekennzeichnet, dass die selbstzündende Hubkolben-Brennkraftmaschine zweitaktig ausgeführt ist und der Einspritzbeginn der Brennstoff-Einspritzvorrichtung (3) sowie der Schliessbeginn des Auslassventils (4) gesteuert wird.

3. Verfahren nach Anspruch 1, dadurch gekennzeichnet, dass die selbstzündende Hubkolben-Brennkraftmaschine viertaktig ausgeführt ist und der Einspritzbeginn der Brennstoff-Einspritzvorrichtung (3) sowie der Öffnungs- und/oder Schliessbeginns des Einlassventils (5) gesteuert wird.

4. Verfahren nach einem der Ansprüche 1 bis 3, dadurch gekennzeichnet, dass die gemessene Zustandsgrösse zumindest eine der folgenden Grössen umfasst,
- Aufladedruck
- Maximaldruck im Zylinder
- Druck zu einem bestimmten Kurbelwellenwinkel im Zylinder
- Motorleistung
- Motordrehzahl
- Turboladerdrehzahl
- Temperatur nach dem Verdichter
- Temperatur nach dem Ladeluftkühler
- Verbrennungsluftmenge
- Abgastemperatur vor der Turbine
- Abgastemperatur nach der Turbine
- Brennstoffmenge.

5. Verfahren nach einem der Ansprüche 1 bis 4, dadurch gekennzeichnet, dass die Hubkolben-Brennkraftmaschine mit einer Emulsion bestehend aus Wasser und Brennstoff betrieben wird.

6. Verfahren nach Anspruch 5, dadurch gekennzeichnet, dass die Menge der Emulsion und/oder der Anteil von Wassers und Brennstoff in der Emulsion in Abhängigkeit der Zustandsgrösse verändert wird.

7. Verfahren nach einem der Ansprüche 1 bis 6, dadurch gekennzeichnet, dass sich der obere Teillastbereich in einem Bereich zwischen 50% und 100% einer Vollast erstreckt.

8. Selbstzündende Hubkolben-Brennkraftmaschine, bei der mit einem Sensor (10) zumindest eine Zustandsgrösse der Hubkolben-Brennkraftmaschine erfasst wird, und in Abhängigkeit der mindestens einen Zustandsgrösse sowohl der Einspritzbeginn einer Brennstoff-Einspritzvorrichtung (3) als auch der Öffnungs- und/oder der Schliessbeginn eines Ein- oder Auslassventils (5,4) gesteuert wird, dadurch gekennzeichnet, dass Steuerungsmittel vorgesehen sind, die auf den Einspritzbeginn und die Ventilsteuerzeiten einwirken, derart dass der Kompressionsdruck im Verbrennungsraum in Funktion der Last in einem oberen Teillastbereich konstant oder annähernd konstant bleibt.

9. Brennkraftmaschine nach Anspruch 8, dadurch gekennzeichnet, dass eine Vorrichtung (30) zum Erzeugen einer Emulsion bestehend aus Wasser und Brennstoff mit der Brennstoff-Einspritzvorrichtung (3) verbunden ist, und dass die Vorrichtung (30) durch die Steuer- und Regelvorrichtung (8) ansteuerbare Förderpumpen (1,9) aufweist, damit die Menge der Emulsion und/oder der Anteil von Wasser und Brennstoff in der Emulsion regelbar ist.

## Claims

1. Method for the operation of a self-igniting reciprocating piston combustion engine in a load range in which at least one state variable of the reciprocating piston combustion engine is measured with a sensor (10) and both the start of injection of a fuel injection apparatus (3) as well the start of the opening and/or closing of an inlet or exhaust valve (5, 4) is controlled in response to the at least one state variable characterized in that the control of the start of injection and of the valve control times is carried out in such a manner that the compression pressure in the combustion chamber as a function of the load in an upper partial load range remains constant or nearly constant.

2. Method in accordance with claim 1 characterised in that the self-igniting reciprocating piston combustion engine is executed with a two-stroke cycle and the start of the injection of the fuel injection apparatus (3) as well as the start of the closure of the exhaust valve (5) is controlled.

3. Method in accordance with claim 1 characterised in that the self-igniting reciprocating piston combustion engine is executed with a four-stroke cycle and the start of the injection of the fuel injection apparatus (3) as well as the start of the opening and/or closure of the exhaust valve (5) is controlled.

4. Method in accordance with one of the claims 1 to 3 characterised in that the measured state variable comprises at least one of the following parameters:
- boost pressure
- maximum pressure in the cylinder
- pressure in the cylinder at a given crankshaft angle
- engine power
- rotational speed of the engine
- rotational speed of the turbocharger
- temperature after the compressor
- temperature after the boost air cooler
- amount of combustion air
- exhaust gas temperature before the turbine
- exhaust gas temperature after the turbine
- amount of fuel.

5. Method in accordance with one of the claims 1 to 4 characterised in that the reciprocating piston combustion engine is operated with an emulsion consisting of water and fuel.

6. Method in accordance with claim 5 characterised in that the amount of the emulsion and/or the proportion of water and fuel in the emulsion is varied in dependence on the state variable.

7. Method in accordance with one of the claims 1 to 6 characterised in that the upper partial load range extends in a range between 50% and 100% of a full load.

8. Self-igniting reciprocating piston combustion engine in which at least one state variable of the reciprocating piston combustion engine is detected by a sensor and both the start of infection of a fuel injection apparatus (3) and also the start of opening and/or closing of an inlet or outlet valve (5,4) is controlled, characterised in that control means are provided which act on the start of injection and the valve control times such that the compression pressure in the combustion space as a function of the load remains constant or approximately constant in an upper partial load range.

9. Apparatus in accordance with claim 8 characterised in that an apparatus (30) for producing an emulsion consisting of water and fuel is connected to the fuel injection apparatus (3); and in that the apparatus (30) has forwarding pumps (1, 9) controllable by the control and regulating device (8) in order that the amount of the emulsion and/or the proportions of water and fuel in the emulsion can be controlled.

## Revendications

1. Procédé pour le fonctionnement d'un moteur alternatif à combustion interne à auto-allumage dans une zone de charge, où est détecté par un capteur (10) au moins une variable d'état du moteur alternatif à combustion interne, et sont commandés en fonction d'au moins une variable d'état précitée à la fois le début d'injection d'un dispositif d'injection de combustible (3) et le début d'ouverture et/ou de fermeture d'une soupape d'admission ou d'échappement (5, 4), caractérisé en ce que la commande du début d'injection et des temps de commande de soupape est effectué de façon que la pression de compression reste constante ou approximativement constante dans l'enceinte de combustion en fonction de la charge dans une zone de charge partielle supérieure.

2. Procédé selon la revendication 1, caractérisé en ce que le moteur alternatif à combustion interne à auto-allumage est réalisé à deux temps, et que sont commandés le début d'injection du dispositif d'injection de combustible (3) ainsi que le début de fermeture de la vanne d'échappement (4).

3. Procédé selon la revendication 1, caractérisé en ce que le moteur alternatif à combustion interne à auto-allumage est réalisé à quatre temps, et que sont commandés le début d'injection du dispositif d'injection du combustible (3) ainsi que le début d'ouverture et/ou de fermeture de la soupape d'admission (5).

4. Procédé selon l'une des revendications 1 à 3, caractérisé en ce que la variable d'état mesurée comprend au moins l'une des variables suivantes,
- pression de suralimentation
- pression maximale dans le cylindre
- pression pour un angle de vilebrequin déterminé dans le cylindre
- capacité de moteur
- vitesse de rotation du moteur
- vitesse de rotation du turbo-compresseur
- température en aval du compresseur
- température en aval du refroidisseur de la charge
- quantité d'air de combustion
- température des gaz d'échappement en amont de la turbine
- température des gaz d'échappement en aval de la turbine
- quantité de combustible.

5. Procédé selon l'une des revendications 1 à 4, caractérisé en ce que le moteur alternatif à combustion interne est amené à fonctionner avec une émulsion constituée d'eau et de combustible.

6. Procédé selon la revendication 5, caractérisé en ce que la quantité de l'émulsion et/ou la part en eau et en combustible est modifiée dans l'émulsion en fonction de la variable d'état.

7. Procédé selon l'une des revendications 1 à 6, caractérisé en ce que la zone de charge partielle supérieure s'étend dans une plage entre 50% et 100% d'une charge pleine.

8. Moteur alternatif à combustion interne à auto-allumage, où au moins une variable d'état du moteur alternatif à combustion interne est détectée avec un capteur (10) et sont commandés en fonction d'au moins une variable d'état précitée à la fois le début d'injection d'un dispositif d'injection de combustible (3) et aussi le début d'ouverture et/ou de fermeture d'une soupape d'admission ou d'échappement (5, 4), caractérisé en ce que des moyens de commande sont prévus qui agissent sur le début d'injection et les temps de commande de soupape de façon que la pression de compression reste constante ou approximativement constante dans l'enceinte de combustion en fonction de la charge dans une zone de charge partielle supérieure.

9. Moteur à combustion interne selon la revendication 8, caractérisé en ce qu'un dispositif (30) pour produire une émulsion constituée d'eau et de combustible est relié au dispositif d'injection de combustible (3), et en ce que le dispositif (30) présente des pompes de convoyage (1, 9) pouvant être commandées par le dispositif de commande et de réglage (8) pour que la quantité de l'émulsion et/ou la part en eau et en combustible dans l'émulsion puisse être réglée.
